(19) Europäisches Patentamt
European Patent Office
Office européen des brevets

(11) **EP 2 336 075 B1**

(12) **EUROPÄISCHE PATENTSCHRIFT**

(45) Veröffentlichungstag und Bekanntmachung des Hinweises auf die Patenterteilung:
**31.10.2012 Patentblatt 2012/44**

(51) Int Cl.:
*B66F 9/06* (2006.01)　　*B66F 9/075* (2006.01)
*B62B 3/06* (2006.01)　　*B62D 7/02* (2006.01)
*B62D 7/04* (2006.01)　　*B66F 9/065* (2006.01)

(21) Anmeldenummer: **10194840.4**

(22) Anmeldetag: **14.12.2010**

(54) **Fahrerlose transporteinrichtung**

Driverless transport device

Dispositif de transport sans conducteur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.12.2009 AT 19912009**

(43) Veröffentlichungstag der Anmeldung:
**22.06.2011 Patentblatt 2011/25**

(73) Patentinhaber: **AMX Automation Technologies GmbH**
**4040 Linz (AT)**

(72) Erfinder: **Schwaiger, Meinhard**
**4040, LINZ (AT)**

(74) Vertreter: **Babeluk, Michael**
**Patentanwalt**
**Mariahilfer Gürtel 39/17**
**1150 Wien (AT)**

(56) Entgegenhaltungen:
**EP-A1- 1 190 982**　　**EP-A1- 2 062 837**
**WO-A1-03/059799**　　**DE-U1- 29 818 249**
**FR-A1- 2 267 976**　　**GB-A- 820 228**
**GB-A- 2 042 217**　　**JP-A- 2003 002 190**
**JP-A- 2008 296 900**

**Beschreibung**

Die Erfindung betrifft eine fahrerlose Transporteinrichtung zum automatischen Befördern, Aufnehmen und Abgeben von Paletten, mit einem im Grundriss im Wesentlichen U-förmigen Fahrgestell mit zwei Schenkeln, wobei auf jedem Schenkel des Fahrgestells zumindest eine lenkbare Radeinheit angeordnet ist.

Aus der GB 820 228 B ist ein Stapelfahrzeug mit einem U-förmigen Fahrgestell bekannt, wobei jeder Schenkel des Fahrgestelles eine Radeinheit mit lenkbaren Rädern aufweist. Die Radeinheiten sind über eine Lenkvorrichtung zentral betätigbar.

Die AT 409 369 B offenbart eine Einrichtung zum Transport von Gütern mittels eines Portalhebezeugs, welches mit einer Allradlenkung versehen ist, wobei die in Führungen verfahrbaren Räder um 90° geschwenkt werden können.

Die DE 33 24 862 A1 beschreibt einen Lenkmechanismus für ein Fahrzeug mit Allradlenkung mit einem die Räder miteinander verbindenden Hebelgestänge.

Autonom agierende fahrerlose Transportsysteme sind aus den Druckschriften EP 2 062 837 A1, WO 05/118 436 A1, DE 30 03 287 A1, DE 33 28 241 A1 und DE 24 35 494 A1 bekannt.

Die US 5,623,818 A zeigt ein vierrädriges Fahrzeug, dessen Radeinheiten einzeln, z.B. über hydraulische Motoren, angetrieben werden. Je zwei Radeinheiten sind mechanisch gekoppelt, so dass eine Rotation des Fahrzeuges am Stand ermöglicht wird.

Die Druckschrift WO 03/059799 A1 offenbart eine Transporteinrichtung zum Befördern, Aufnehmen und Abgeben von Paletten, mit einem im Grundriß im Wesentlichen U-förmigen Fahrgestell mit zwei Schenkeln, wobei auf jedem Schenkel des Fahrgestells zumindest eine lenkbare Radeinheit angeordnet ist und wobei zumindest eine lenkbare Radeinheit einzeln über jeweils zumindest eine Antriebseinheit antreibbar ist.

Die GB 2 042 217 A offenbart ein selbstfahrendes Transportfahrzeug mit einem lenkbaren Antriebsrad und zwei Stützrädern, deren Drehbewegung über Sensoren erfasst wird.

Weiters ist aus der DE 42 34 174 A1 ein fahrerloses Flurförderfahrzeug mit Licht-oder Ultraschallsensoren bekannt, wobei eine Fahrkorrektur durchgeführt wird, wenn die Sensoren eine Fehlstellung anzeigen.

Insbesondere beim automatischen Aufladen von Paletten ergibt sich die Problematik, dass die Transporteinrichtung und die Paletten genau fluchtend zueinander ausgerichtet sein müssen, um ein kollisionsfreies Aufnehmen des Palettengutes zur ermöglichen. Dies erfordert ein besonders exakt arbeitendes Positioniersystem und eine hochentwickelte Steuerung und Logistik. Kommt es aber aus einem nicht vorherzusehenden Grund zu einem Positionierfehler der Palette, so sind Kollisionen und Beschädigungen beim Aufnehmen durch eine fahrerlose Transporteinrichtung nicht zu vermeiden.

Aufgabe der Erfindung ist es, Kollisionen zwischen der Transporteinrichtung und den Paletten und somit Beschädigungen zu verhindern.

Erfindungsgemäß wird dies durch eine Transporteinrichtung gemäß dem Anspruch 1 erreicht.

Durch Antreiben zumindest eines der beiden Laufräder durch einen vorzugsweise büstenlosen Elektromotor lässt sich dabei sehr einfach die Radeinheit um eine vertikale Drehachse verdrehen. Dabei kann das andere Laufrad gebremst oder eventuell in Gegenrichtung angetrieben werden. Eine besonders effektive Steuerung der Bewegung der Transporteinrichtung lässt sich erzielen, wenn die beiden Laufräder zumindest einer Radeinheit, vorzugsweise über jeweils einen - besonders vorzugsweise bürstenlosen - Elektromotor, unabhängig voneinader antreibbar sind. Höchtmögliche Bewegungsfreiheit lässt sich erzielen, wenn jedes Laufrad jeder Radeinheit separat über einen Elektromotor antreibbar sind. Die Koordination der Elektromotoren erfolgt dabei über eine elektronische Steuereinheit. Dadurch kann beispielsweise gewährleistet werden, dass sich die Drehachsen aller Laufräder in einem Momentanpol treffen.

Besonders vorteilhaft ist es, wenn jeder Schenkel eine vordere und eine hintere Radeinheit aufweist, wobei die Radeinheiten vorzugsweise im Bereich der Ekken des Fahrgestells angeordnet sind.

Dadurch, dass alle Radeinheiten des Fahrzeuges angetrieben und gelenkt werden können, ist ein besonders genaues Ansteuern der Paletten möglich.

Weiters ist es vorteilhaft, wenn zumindest zwei Radeinheiten miteinander über eine vorzugsweise mechanische Kopplungseinrichtung verbunden sind, wobei vorzugsweise jeweils zwei vordere und zwei hintere Radeinheiten über die Kopplungseinrichtung verbunden sind. Zur Verstellung der Koppeleinrichtungen kann die Transporteinrichtung mit Spindelantrieben ausgestattet sein.

Über den Einzelantrieb einer Antriebseinheit kann eine Schwenkbewegung der gekoppelten Radeinheiten um vertikale Achsen durchgeführt werden. Im Fahrzustand kann eine Schwenkbewegung der Radeinheit durch Drehzahlunterschiede in den Drehzahleinheiten realisiert werden. Dabei kann zur Ansteuerung bei Kurvenfahrten eine Drehzahlanpassung an unterschiedliche Kurvenradien erfolgen.

Die Allradlenkung und der Allradantrieb erlaubt es, dass ein Richtungswechsel des Fahrzeuges am Stand durchgeführt werden kann, wobei die erforderliche Rangierfläche gleich groß bzw. nur geringfügig größer ist als die vom Umfangkreis der Palette gebildete Fläche. Somit kann die fahrerlose Transporteinrichtung eine Drehung am Stand um die Vertikalachse der Palette ausführen.

In Weiterführung der Erfindung ist vorgesehen, dass eine Hubgabel durch eine pneumatisch, hydraulisch oder elektrisch betätigbare Hubeinrichtung vertikal verstellbar ist, wobei vorzugsweise die Hubeinrichtung eine Kniehebelführung, eine Kulissenführung oder eine Parallelogrammführung aufweist. Die Transporteinrichtung kann vor-, rück- oder seitwärts sowie entlang einer vorgegebenen Trajektorie bewegt werden.

Beim Schwenken der Antriebseinheiten wird der bürstenlose Elektromotor stromlos geschalten.

Im Rahmen der Erfindung ist vorgesehen, dass die fahrerlose Transportvorrichtung über ein automatisiertes Batterieaufladesystem aufladbar ist, wobei besonders vorteilhaft ein automatischer Batteriewechsel vorgesehen sein kann. Um die Einsatzzeit der Transporteinrichtung mit einer Batterieladung zu erhöhen, kann die Bremsenergie zur Aufladung der Batterien genutzt werden.

Um ein kollisionsfreies Verfahren der Transporteinrichtung und ein schonendes Aufnehmen und Abgeben der Paletten zu ermöglichen, ist vorgesehen, dass es zumindest eine Sensoreinrichtung aufweist, wobei vorzugsweise die Sensoreinrichtung zumindest einen mechanischen oder berührungslosen Sensor zur Erkennung von Hindernissen und/oder zur Erkennung der Palettenposition und Ausrichtung aufweist. Besonders vorteilhaft ist es dabei, wenn zumindest ein Sensor auf der Hubgabel, vorzugsweise seitlich der Hubgabel und/oder an zumindest einer Gabelspitze der Hubgabel angeordnet ist. Dabei können beispielsweise seitliche Sensorleisten auf den Hubgabeln vorgesehen sein, welche etwa als mechanische oder berührungslose Sensoren (z.B. Infrarotsensor, Ultraschallsensor oder dergleichen) ausgebildet sein können. Zur automatischen Kollisionserkennung bei Kontakt mit einem Hindernis kann die fahrerlose Transporteinrichtung mit einer Antriebsmomentüberwachung der Antriebseinheiten ausgeführt sein. Im Falle eines Kontaktes mit einem Hindernis kann somit der Antrieb automatisch gestoppt werden.

Die Erfindung wird im Folgenden anhand der Figuren näher erläutert. Es zeigen:

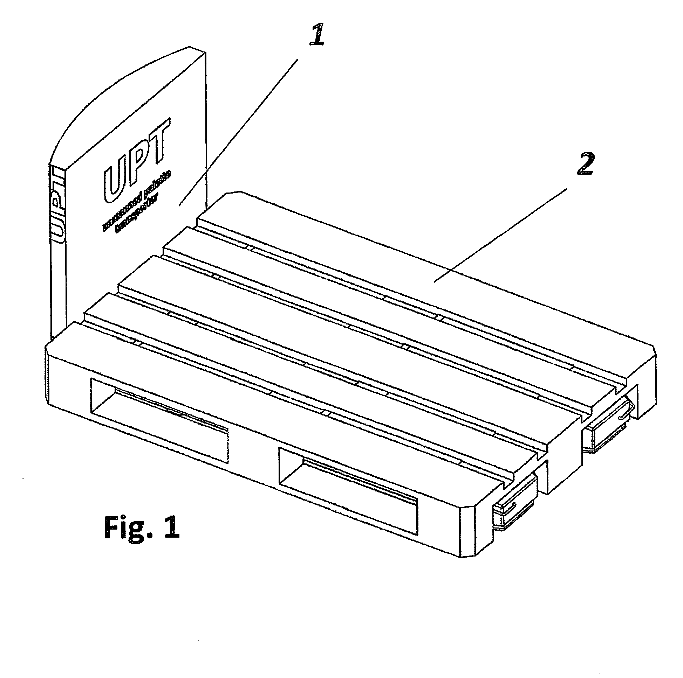

Fig. 1 eine erfindungsgemäße fahrerlose Transporteinrichtung samt Pa- lette in einer Schrägansicht;

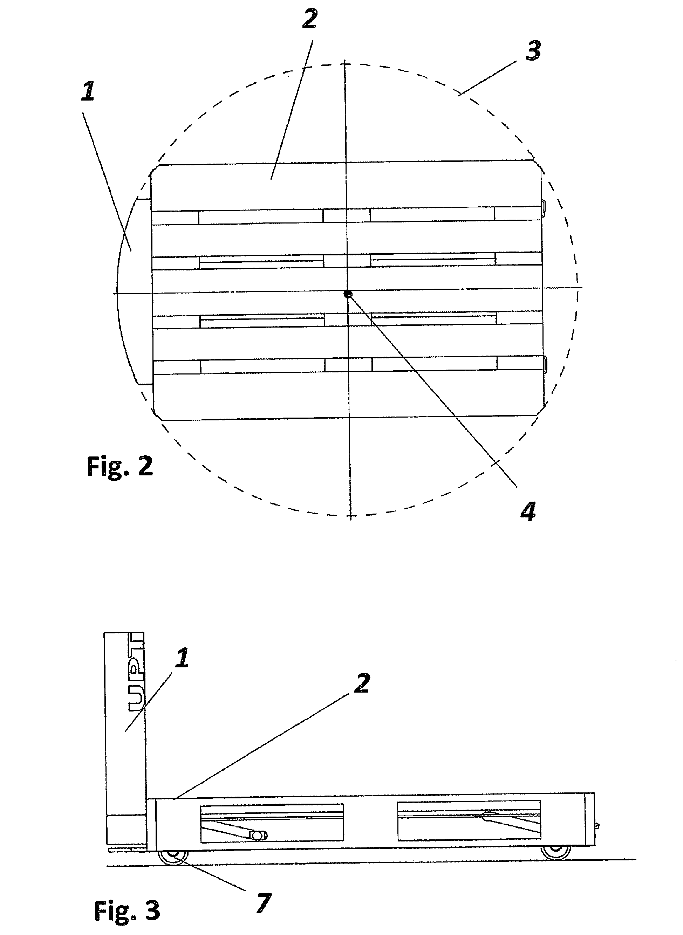

Fig. 2 die Transporteinrichtung in einer Draufsicht;

Fig. 3 die Transporteinrichtung in einer Seitenansicht;

Fig. 4 die Transporteinrichtung in einer Ansicht von unten;

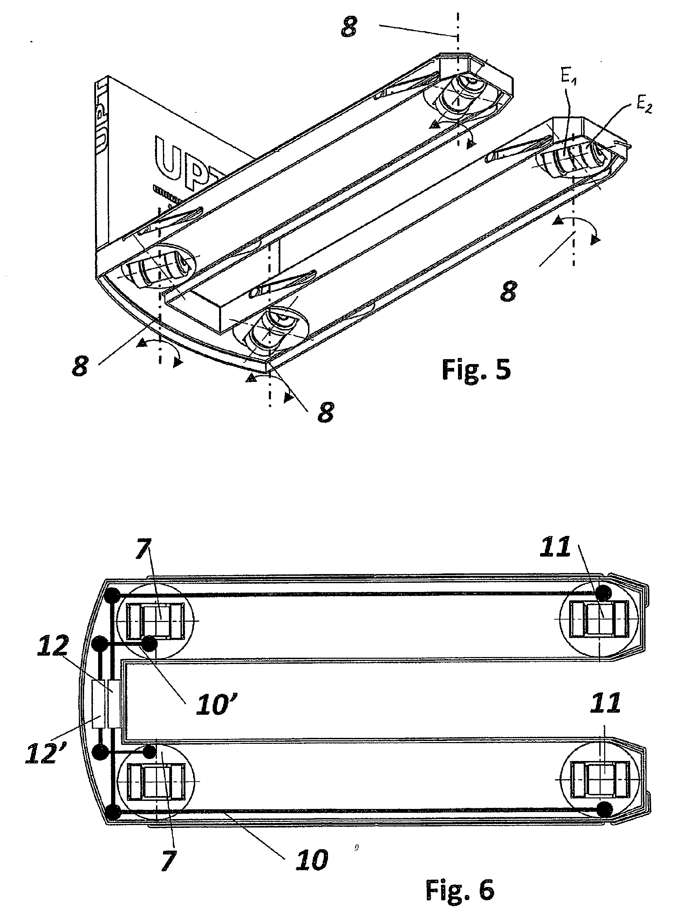

Fig. 5 die Transporteinrichtung in einer Schrägansicht von unten;

Fig. 6 die Transporteinrichtung in einer weiteren Ansicht von unten;

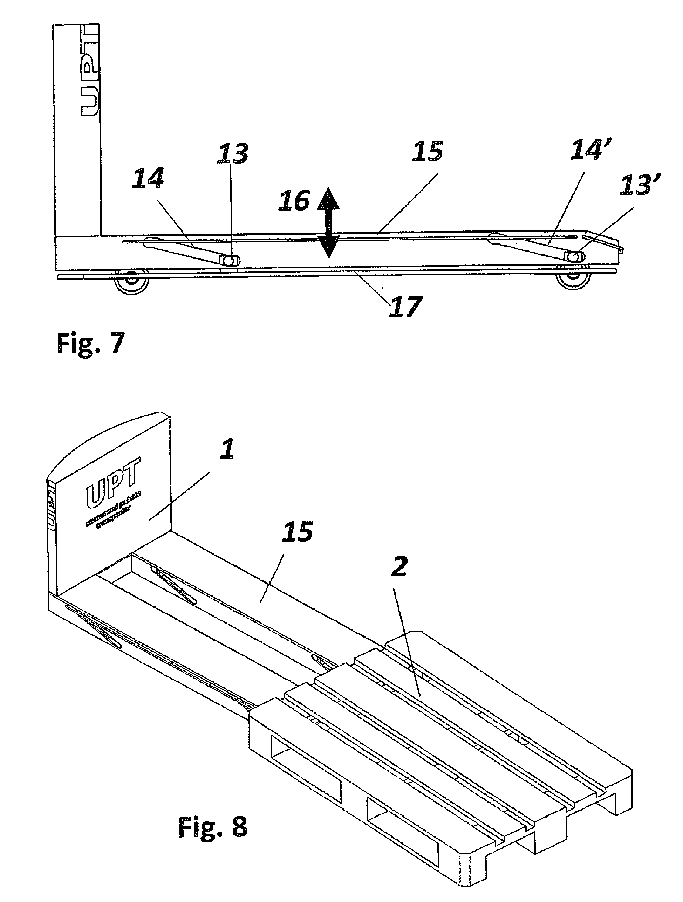

Fig. 7 die Transporteinrichtung in einer Seitenansicht;

Fig. 8 die Transporteinrichtung samt aufzunehmender Palette in einer Schrägansicht;

Fig. 9 die Transporteinrichtung samt aufzunehmender Palette in einer Draufsicht;

Fig. 10 das Detail X aus Fig. 9;

Fig. 11 das Detail XI aus Fig. 9; und

Fig. 12 schematisch eine Bahnbewegung der erfindungsgemäßen Trans- porteinrichtung.

Die erfindungsgemäße fahrerlose Transporteinrichtung 1 dient zum automatischen Aufnehmen und Abgeben von Paletten 2 und zum Verfahren der Palette 2 von einem beliebigen ersten Punkt zu einem beliebigen zweiten Punkt, ohne dass eine Zusatzeinrichtung erforderlich wäre. Die Transporteinrichtung 1 weist ein im Wesentlichen ein U-förmiges Fahrgestell 17 auf, auf welchem eine Hubgabel 15 vertikal bewegbar angeordnet ist. Im Bereich der Ecken des Fahrgestells 17 ist jeweils eine Radeinheit 11, 11' angeordnet, wobei jede Radeinheit 11 um eine vertikale Achse 8 verdreht werden kann. Die Radeinheiten 11, 11' sind jeweils auf den Schenkeln des offenen Fahrgestells 17 angeordnet. Dabei sind jeweils die im Bereich der Spitzen der Hubgabel 15 angeordneten vorderen Radeinheiten 11 durch eine erste Kopplungseinrichtung 10 und die den Spitzen der Hubgabel 15 abgewandten hinteren Radeinheiten 11' durch eine zweite Kopplungseinrichtung 10' miteinander gekoppelt. Die Betätigung der Kopplungseinrichtung 10, 10' erfolgt jeweils durch eine beispielsweise durch einen Spindelantrieb 12, 12' gebildete Lenkeinrichtung. Die Kopplungseinrichtung 10, 10' ist in den Figuren nur schematisch angedeutet. Die Kopplungseinrichtungen 10, 10' können als Kopplungsgestänge oder dergleichen ausgebildet sein.

Jede der Radeinheiten 11 ist über eine eigene Antriebseinheit 7 antreibbar. Dabei besteht jede Radeinheit 11 aus einem ersten Laufrad 7' und einem zweiten Laufrad 7", wobei jeweils nur eines der beiden Laufräder 7', 7" durch die beispielsweise durch einen bürstenlosen Elektromotor $E_1$ gebildete Antriebseinheit 7 angetrieben wird. Weiters kann vorgesehen sein, dass das andere Laufrad gebremst oder durch einen weiteren bürstenlosen Elektromotor $E_2$ angetrieben wird. Durch koordinierte Ansteuerung der beiden Elektromotoren $E_1$, $E_2$ durch eine elektronische Steuereinheit lässt sich die Radeinheit 11 am Stand um die vertikale Achse 8 drehen und somit die Bewegungsrichtung der Transporteinrichtung 1 steuern und beliebig ändern.

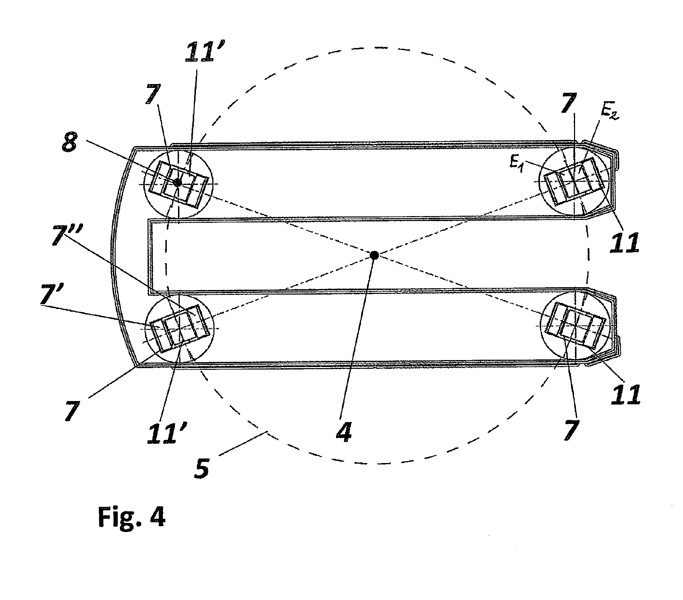

Auf diese Weise kann eine hohe Beweglichkeit der Transporteinrichtung 1 erzielt werden. Beispielsweise ist es möglich, die Transporteinrichtung 1 durch entsprechende Lenkbewegung der Radeinheiten 11, 11' am Stand um eine vertikale Achse 4 zu drehen, wie in Fig. 4 dargestellt ist. Die für einen Richtungswechsel am Stand erforderliche Fläche ist dabei nur geringfügig größer als die vom Umfangkreis 3 der Palette 2 eingeschlossene Fläche.

Die Hubeinrichtung für die Hubgabel 15 kann beispielsweise eine Kulissenführung 14 aufweisen, wobei durch Längsverschieben einer seitlichen Abstützeinrichtung 13, 13' der Hubgabel 15 entlang der Kulissenführung 14, 14' ein definierter Hub 16 der Hubgabel 15 erreicht wird.

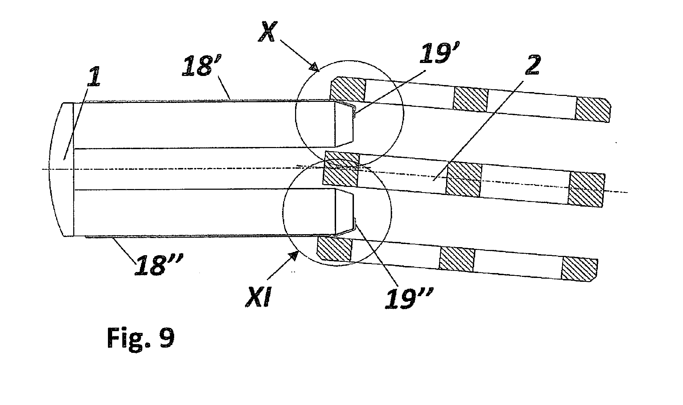

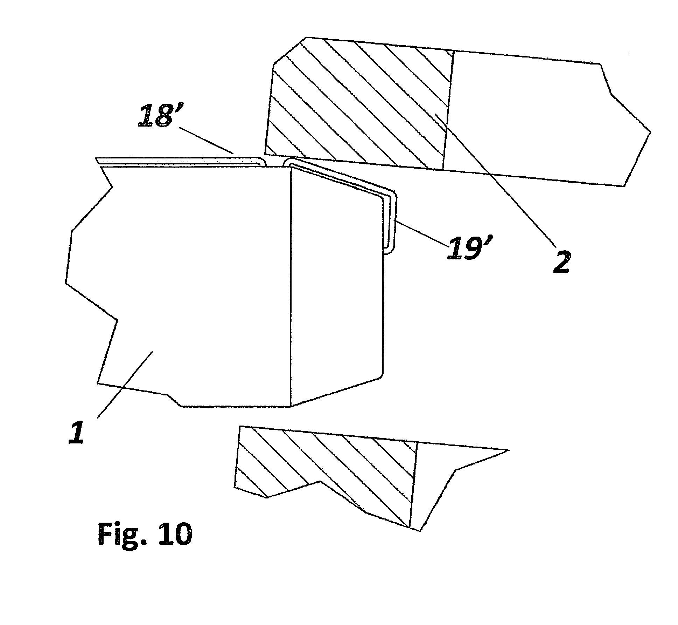

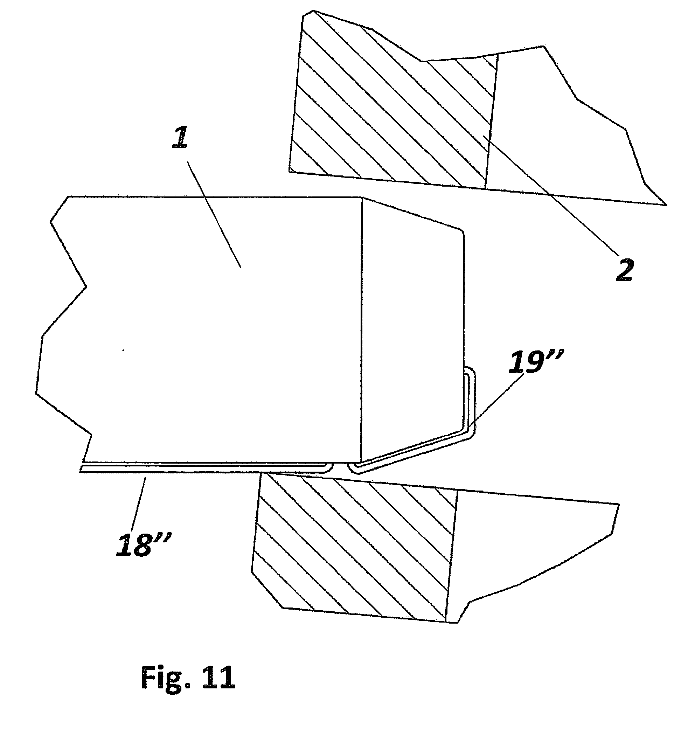

Um ein automatisches Ausrichten der Transporteinrichtung 1 relativ zur aufzunehmenden Palette 2 zu ermöglichen, ist die Transporteinrichtung 1 mit mechanischen oder berührungslosen Sensoren 18', 18", 19', 19" (zum Beispiel Infrarotsensoren, Ultraschallsensoren oder dergleichen) ausgestattet. Wie in den Fig. 9 bis Fig. 11 dargestellt ist, sind im Ausführungsbeispiel jeweils eine Sensorleiste 18', 18" an jedem Schenkel der Hubgabel 15 oder des U-förmigen Fahrgestells 17 angeordnet. Weiters sind im Bereich jede Gabelspitze der Hubgabel 15 oder des Fahrgestells 17 Sensoren 19', 19" angeordnet.

Die Sensoren stehen mit einer Steuereinheit in Verbindung, welche die Antriebseinheiten 7 und die Lenkeinheiten 12 so ansteuern, dass die Transporteinrichtung 1 axial zur aufzunehmenden Palette 2 selbständig ausgerichtet wird, um eine Kollision mit der Palette 2 und/oder ein Verschieben oder Verdrehen der Palette 2 durch die Transporteinrichtung 1 zu vermeiden. Erst wenn die Hubgabel 15 vollständig unter die Palette 2 eingefahren ist, erfolgt das Anheben der Hubgabel 15 samt der Palette 2, worauf die Transporteinrichtung 1 in Ausführung ihres übermittelten Auftrages die Palette 2 zum Zielort transportieren und dort abgeben kann.

Die fahrerlose Transporteinrichtung 1 kann beliebig vor-, rück- oder seitwärts bewegt und auch entlang einer vorgegebenen Trajektorie gefahren werden. Dabei können Kurvenfahrten über Richtungs- und Drehzahlanpassungen der Antriebseinrichtungen 13 ausgeführt werden.

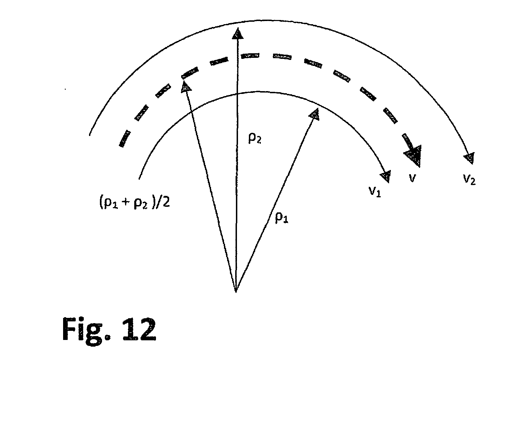

Wie in Fig. 12 schematisch dargestellt ist, werden durch Drehzahlsteuerung die kurveninneren und kurvenäußeren Antriebseinheiten 7 getrennt angesteuert. In Fig. 12 ist der Radius der Kurve der inneren Antriebseinheit 7 mit $\rho_1$ und der Radius der äußeren Antriebseinheit 7 mit $\rho_2$ bezeichnet. Mit der Winkelgeschwindigkeit

$$\omega = 2*v/(\rho_1 + \rho_2)$$

berechnet sich die Geschwindigkeit $v_2$ der äußeren Antriebseinheit 7

$$v_2 = \omega * \rho_2$$

und die Geschwindigkeit $v_1$ der inneren Antriebseinheit

$$v_1 = \omega * \rho_1.$$

v ist dabei die mittlere Geschwindigkeit der Transporteinrichtung 1.

Der Antrieb der Radeinheiten 11 erfolgt dabei jeweils über einen bürstenlosen Elektromotor $E_1$, $E_2$, wobei über die Elektromotoren $E_1$, $E_2$ Bremsenergie rückgewonnen werden kann.

Beim Schwenken der Antriebseinheiten 7 über die Lenkeinrichtungen 12 im Stand können die bürstenlosen Elektromotoren $E_1$, $E_2$ stromlos geschalten werden. Die fahrerlose Transporteinrichtung 1 erlaubt es auch, über Einzelantrieb einer Antriebseinheit 7 eine Schwenkbewegung der gekoppelten Antriebseinheit durchzuführen. Im Fahrzustand wird eine Schwenkbewegung der Antriebseinheiten 7 mittels Drehzahlunterschieden der einzelnen Antriebseinheiten 7 durchgeführt.

Dadurch, dass pro Einheit nur ein Laufrad 7' angetrieben und das andere Laufrad 7" frei drehbar gelagert ist, wird eine verschleißarme Drehbewegung um die Vertikalachse 8 ermöglicht.

Die fahrerlose Transporteinrichtung 1 kann mit einem automatisierten Batterieaufladesystem gekoppelt sein, welches beispielsweise einen automatischen Batteriewechsel ausführt. Um dies zu bewerkstelligen, fährt die fahrerlose Transporteinrichtung 1 bei niedrigem Ladezustand der aufladbaren Batterie zu einer Batterieladestation, wo eine automatischer Batteriewechsel durchgeführt wird. Sehr vorteilhaft ist es dabei, wenn die Transporteinrichtung 1 mit einem automatischen Navigationssystem ausgestattet ist. Um eine optimale Wirtschaftlichkeit zu erreichen, weist die Transporteinrichtung 1 ein minimales Eigengewicht und verbrauchsoptimierte Antriebseinheiten 7 auf. Die Transporteinrichtung 1 kann mit einem Antriebsmoment-Überwachungssystem der Antriebseinheiten 7 ausgestattet sein, um bei Kontakt mit einem Hindernis eine automatische Kollisionserkennung zu ermöglichen. Im Falle einer Kollisionserkennung wird der Antrieb der Antriebseinheiten 7 automatisch gestoppt.

**Patentansprüche**

1. Fahrerlose Transporteinrichtung (1) zum automatischen Befördern, Aufnehmen und Abgeben von Paletten (2), mit einem im Grundriss im Wesentlichen U-förmigen Fahrgestell (17) mit zwei Schenkeln, wobei auf jedem Schenkel des Fahrgestells (17) zumindest eine lenkbare Radeinheit (11) angeordnet ist, **dadurch gekennzeichnet, dass** zumindest eine lenkbare Radeinheit (11, 11') einzeln über jeweils zumindest eine Antriebseinheit (7) antreibbar ist, wobei die lenkbare Radeinheit (11, 11'), vorzugsweise jede lenkbare Radeinheit (11, 11'), zwei Laufräder (7', 7") aufweist.

2. Transporteinrichtung (1) nach Anspruch 1, **dadurch gekennzeichnet, dass** zumindest eines der beiden Laufräder (7', 7") zumindest einer Radeinheit (11), vorzugsweise über einen - besonders vorzugsweise bürstenlosen - Elektromotor ($E_1$), antreibbar ist.

3. Transporteinrichtung (1) nach Anspruch 1 oder 2, **dadurch gekennzeichnet, dass** die beiden Laufräder (7', 7") zumindest einer Radeinheit (11), vorzugsweise über jeweils einen - besonders vorzugsweise bürstenlosen - Elektromotor ($E_1$, $E_2$), unabhängig voneinader antreibbar sind.

4. Transporteinrichtung (1) nach einem der Ansprüche 1 bis 3, **dadurch gekennzeichnet, dass** jeder Schenkel eine vordere und eine hintere Radeinheit aufweist, wobei die Radeinheiten (11, 11') vorzugsweise im Bereich der Ecken des Fahrgestells (17) angeordnet sind.

5. Transporteinrichtung (1) nach einem der Ansprüche 1 bis 4, **dadurch gekennzeichnet, dass** zumindest zwei Radeinheiten (11, 11') miteinander über eine vorzugsweise mechanische Kopplungseinrichtung (10, 10') verbunden sind.

6. Transporteinrichtung (1) nach Anspruch 5, **dadurch gekennzeichnet, dass** jeweils zwei vordere und zwei hintere Radeinheiten (11, 11') über die Kopplungseinrichtung (10, 10') verbunden sind.

7. Transporteinrichtung (1) nach Anspruch 5 oder 6, **dadurch gekennzeichnet, dass** die Kopplungseinrichtung (10, 10') über einen Spindelantrieb (12, 12') antreibbar ist.

8. Transporteinrichtung (1) nach einem der Ansprüche 1 bis 7, **dadurch gekennzeichnet, dass** eine Hubgabel (15) durch eine pneumatisch, hydraulisch oder elektrisch betätigbare Hubeinrichtung vertikal verstellbar ist, wobei vorzugsweise die Hubeinrichtung eine Kniehebelführung, eine Kulissenführung (14) oder eine Parallelogrammführung aufweist.

9. Transporteinrichtung (1) nach einem der Ansprüche 1 bis 8, **dadurch gekennzeichnet, dass** es zumindest eine Sensoreinrichtung (18', 18", 19', 19") aufweist.

10. Transporteinrichtung (1) nach Anspruch 9, **dadurch gekennzeichnet, dass** die Sensoreinrichtung zumindest einen mechanischen oder berührungslosen Sensor (19', 19") zur Erkennung von Hindernissen und/oder zur Erkennung der Palettenposition und Ausrichtung aufweist.

11. Transporteinrichtung (1) nach einem der Ansprüche 8 bis 10, **dadurch gekennzeichnet, dass** zumindest ein Sensor (19', 19") auf der Hubgabel (15), vorzugsweise seitlich der Hubgabel (15) und/oder an zumindest einer Gabelspitze der Hubgabel (15) angeordnet ist.

## Claims

1. A driverless transport device (1) for automatically conveying, receiving and delivering palettes (2), comprising a frame chassis (17) which is substantially U-shaped in its layout and comprises two limbs, with at least one steerable wheel unit (11) being arranged on each limb of the frame chassis (17), **characterised in that** at least one steerable wheel unit (11, 11') can be driven individually via at least one respective drive unit (7), with the steerable wheel unit (11, 11'), preferably each steerable wheel unit (11, 11'), having two running wheels (7', 7").

2. A transport device (1) according to claim 1, **characterised in that** at least one of the two running wheels (7', 7") of at least one wheel unit (11) can preferably be driven via an (especially preferably brushless) electric motor ($E_1$).

3. A transport device (1) according to claim 1 or 2, **characterised in that** the two running wheels (7', 7") of at least one wheel unit (11) can be driven independently from one another preferably via an (especially preferably brushless) electric motor ($E_1$, $E_2$).

4. A transport device (1) according to one of the claims 1 to 3, **characterised in that** each limb comprises a front and rear wheel unit, with the wheel units (11, 11') preferably being arranged in the region of the corners of the frame chassis (17).

5. A transport device (1) according to one of the claims 1 to 4, **characterised in that** at least two wheel units (11, 11') are connected with each other via a preferably mechanical coupling device (10, 10').

6. A transport device (1) according to claim 5, **characterised in that** two respective front and two respective rear wheel units (11, 11') are connected with each other via the coupling device (10, 10').

7. A transport device (1) according to claim 5 or 6, **characterised in that** the coupling device (10, 10') can be driven via a spindle drive (12, 12').

8. A transport device (1) according to one of the claims 1 to 7, **characterised in that** a lifting fork (15) is vertically adjustable by a lifting device which can be actuated pneumatically, hydraulically or electrically, with the lifting device preferably comprising a toggle lever guide, a sliding-block guide (14) or a parallelogram guide.

9. A transport device (1) according to one of the claims 1 to 8, **characterised in that** it comprises at least one sensor device (18', 18", 19', 19").

10. A transport device (1) according to claim 9, **characterised in that** the sensor device comprises at least one mechanical or contactless sensor (19', 19") for recognizing obstructions and/or for recognizing the palette position and orientation.

11. A transport device (1) according to one of the claims 8 to 10, **characterised in that** at least one sensor (19', 19") is arranged on the lifting fork (15), preferably to the side of the lifting fork (15) and/or on at least one fork tip of the lifting fork (15).


**Revendications**

1. Dispositif de transport sans conducteur (1) pour le transport, la réception et la livraison automatiques de palettes (2), comportant un châssis de déplacement (17) essentiellement en forme de U en projection horizontale, et équipé de deux branches, au moins une unité de roues orientable (11) étant montée sur chacune des branches du châssis de déplacement (17),
**caractérisé en ce qu'**
au moins une unité de roues orientable (11, 11') peut être actionnée individuellement par, au moins une unité d'entrainement (7) respective, l'unité de roues orientable (11, 11') et de préférence chaque unité de roues orientable (11, 11') comportant deux roues mobiles (7', 7").

2. Dispositif de transport (1) conforme à la revendication 1,
**caractérisé en ce qu'**
au moins l'une des deux roues mobiles (7', 7") d'au moins une unité de roues (11) peut être commandée de préférence par l'intermédiaire d'un moteur électrique de manière particulièrement préférentielle d'un moteur électrique ($E_1$) sans balais.

3. Dispositif de transport (1) conforme à la revendication 1 ou 2,
**caractérisé en ce que**
les deux roues orientables (7', 7") d'au moins une unité de roues (11) peuvent être commandée indépendamment l'une de l'autre de préférence par l'intermédiaire d'un moteur électrique ($E_1$, $E_2$) respectif, et de manière particulièrement préférentielle d'un

moteur électrique ($E_1$, $E_2$) sans balais respectif.

4. Dispositif de transport (1) conforme à l'une des revendications 1 à 3,
**caractérisé en ce que**
chacune des branches comporte une unité de roues avant et une unité de roues arrières, ces unités de roues (11, 11') étant de préférence montées dans la zone des coins du châssis de déplacement (17).

5. Dispositif de transport (1) conforme à l'une des revendications 1 à 4,
**caractérisé en ce qu'**
au moins deux unités de roues (11, 11') sont reliées entre elles au moyen d'un dispositif d'accouplement (10, 10') de préférence mécanique.

6. Dispositif de transport (1) conforme à la revendication 5,
**caractérisé en ce que**
les deux unités de roues avant et les deux unités de roues arrières (11, 11') sont respectivement reliées par le dispositif d'accouplement (10, 10').

7. Dispositif de transport (1) conforme à la revendication 5 ou 6,
**caractérisé en ce que**
le dispositif d'accouplement (10, 10') peut être actionné par un organe d'entrainement à broche (12, 12').

8. Dispositif de transport (1) conforme à l'une des revendications 1 à 7,
**caractérisé en ce qu'**
une fourche de levage (15) est réglable en hauteur par l'intermédiaire d'un dispositif de levage à actionnement pneumatique hydrauliques ou électrique, ce dispositif de levage étant de préférence équipé d'un organe de guidage à genouillière, d'un organe de guidage à poulie (14) ou d'un organe de guidage à parallélogramme.

9. Dispositif de transport (1) conforme à l'une des revendications 1 à 8,
**caractérisé en ce qu'**
il est équipé d'au moins un dispositif de détection (18', 18", 19', 19").

10. Dispositif de transport (1) conforme à la revendication 9,
**caractérisé en ce que**
le dispositif de détection comporte au moins un détecteur (19', 19") mécanique ou sans contact pour identifier des obstacles et/pour identifier la position et l'orientation des palettes.

11. Dispositif de transport (1) conforme à l'une des revendications 8 à 10,

**caractérisé en ce qu'**
au moins un détecteur (19',19") est monté sur la fourche de levage (15) de préférence latéralement sur la fourche de levage (15) et/ ou au niveau d'au moins l'une des pointes de la fourche de levage (15).

**Fig. 1**

**Fig. 2**

**Fig. 3**

Fig. 4

**Fig. 5**

**Fig. 6**

**Fig. 7**

**Fig. 8**

Fig. 9

**18'**

**19'**

**2**

**1**

## Fig. 10

**Fig. 11**

**Fig. 12**

EP 2 336 075 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 820228 B
- AT 409369 B
- DE 3324862 A1
- EP 2062837 A1
- WO 05118436 A1
- DE 3003287 A1

- DE 3328241 A1
- DE 2435494 A1
- US 5623818 A
- WO 03059799 A1
- GB 2042217 A
- DE 4234174 A1